(19) **Europäisches Patentamt / European Patent Office / Office européen des brevets**

(11) **EP 4 675 906 A1**

(12) # EUROPEAN PATENT APPLICATION

(43) Date of publication:
**07.01.2026 Bulletin 2026/02**

(21) Application number: **25186677.8**

(22) Date of filing: **01.07.2025**

(51) International Patent Classification (IPC):
**H02M 1/00** (2006.01) **H02M 1/12** (2006.01)
**H02M 7/5387** (2007.01)

(52) Cooperative Patent Classification (CPC):
**H02M 7/53871; H02M 1/0003; H02M 1/0025;
H02M 1/0058; H02M 1/12**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **04.07.2024 CN 202410889290
04.07.2024 CN 202410889288**

(71) Applicant: **SHENZHEN POWEROAK NEWENER
CO., LTD
Shenzhen, Guangdong 518000 (CN)**

(72) Inventors:
• **MA, Hui**
  **Shenzhen Guangdong, 518000 (CN)**
• **QIN, Geng**
  **Shenzhen Guangdong, 518000 (CN)**
• **CANG, Wentao**
  **Shenzhen Guangdong, 518000 (CN)**
• **WANG, Yiren**
  **Shenzhen Guangdong, 518000 (CN)**
• **HAO, Chuantong**
  **Shenzhen Guangdong, 518000 (CN)**
• **GUO, Zhihua**
  **Shenzhen Guangdong, 518000 (CN)**

(74) Representative: **Santarelli
Tour Trinity
1 bis Place de la Défense
92400 Courbevoie (FR)**

(54) **GRID-CONNECTED INVERTER CONTROL METHOD AND GRID-CONNECTED INVERTER**

(57) The present application relates to a grid-connected inverter control method and a grid-connected inverter, wherein the method comprises: acquiring a DC input voltage, a grid voltage and a grid-connected reference current; determining a switching transistor operating at high frequency according to the polarity of the grid-connected reference current; determining the current working mode of the grid-connected inverter according to the grid voltage and the polarity of the grid-connected reference current; determining the switching period and the duty ratio of the switching transistor according to the DC input voltage, the grid voltage and a period calculation rule corresponding to the working mode; and controlling zero-voltage/valley-voltage switching of the switching transistor according to the switching period and the duty ratio of the switching transistor. Therefore, the zero-voltage/valley-voltage switching of the switching transistor for the grid-connected inverter is realized, which effectively reduces the loss caused by the turn-on process of the switching transistor.

FIG. 1

## Description

## Technical Field

The present application relates to the technical field of micro-grids, and in particular, relates to a grid-connected inverter control method and a grid-connected inverter.

## Background of the Invention

Grid-connected inverters are widely used in the technical field of micro-grids, and common grid-connected inverters are composed of four switching transistors and a filter circuit. By controlling the high-frequency switching operation of the switching transistors, high-frequency current is generated, which is then converted into utility-frequency alternating current via the filter circuit before being fed into the grid. However, the conventional hard-switching control method will result in a significant turn-on loss of the switching transistor, which is not conducive to the development of grid-connected inverters towards high frequency and high efficiency.

## Summary of the Invention

An embodiment of the present application aims to provide a grid-connected inverter control method and a grid-connected inverter, so as to solve the problem of excessive turn-on loss of a switching transistor in the grid-connected inverter of the prior art.

In order to solve the above technical problems, an embodiment of the present application provides the following technical solution.

According to an aspect of the present application, a grid-connected inverter control method is provided, which comprises:

Step A, acquiring a DC input voltage, a grid voltage and a grid-connected reference current;
Step B, determining a switching transistor operating at high frequency according to the polarity of the grid-connected reference current;
Step C, determining the current working mode of the grid-connected inverter according to the grid voltage and the polarity of the grid-connected reference current, the working mode including an inverter mode and a rectifier mode;
Step D, determining the switching period and the duty ratio of the switching transistor according to the DC input voltage, the grid voltage and a period calculation rule corresponding to the working mode, the period calculation rule being a calculation rule of the switching period meeting zero-voltage/valley-voltage switching conditions; and
Step E, controlling zero-voltage/valley-voltage switching of the switching transistor according to the switching period and the duty ratio of the switching transistor.

According to another aspect of the present application, a grid-connected inverter is provided, which comprises a controller configured to execute the above method.

Beneficial effects of the embodiments of the present application are as follows: different from the situation in the prior art, in the embodiment of the present application, a grid-connected inverter control method is provided, and by adopting the method of the present application, the zero-voltage/valley-voltage switching of the switching transistor for the grid-connected inverter is realized, thereby effectively reducing the loss caused by the turn-on process of the switching transistor.

## Brief description of the Drawings

One or more embodiments are exemplarily described with reference to pictures in corresponding attached drawings, and these exemplary descriptions are not intended to limit the embodiments. In the attached drawings, elements with the same reference numerals represent the same or similar elements, and unless otherwise stated, the pictures in the attached drawings are not intended to limit the scale.

FIG. 1 is a flowchart diagram of a grid-connected inverter control method provided according to a first embodiment of the present application.
FIG. 2 is a schematic view of the topological structure of a grid-connected inverter provided according to the first embodiment of the present application.
FIG. 3 is a schematic view of PWM driving signals of switching transistors for the grid-connected inverter in FIG. 2 when the grid-connected reference current leads the grid voltage.

FIG. 4 is a schematic view of PWM driving signals of switching transistors for the grid-connected inverter in FIG. 2 when the grid-connected reference current lags the grid voltage.

FIG. 5 is a schematic view of the first set of waveforms of switching transistor $S_1/S_4$ driving, drain-source voltage $V_{ds1}/V_{ds4}$ and first filter inductor current $i_{L1}$ in the region A of FIG. 3.

FIG. 6 is a schematic view of the second set of waveforms of switching transistor $S_1/S_4$ driving, drain-source voltage $V_{ds1}/V_{ds4}$ and first filter inductor current $i_{L1}$ in the region A of FIG. 3.

FIG. 7 is a schematic view of the first set of waveforms of switching transistor $S_2/S_3$ driving, drain-source voltage $V_{ds2}/V_{ds3}$ and second filter inductor current $i_{L2}$ in the region B of FIG. 3.

FIG. 8 is a schematic view of the second set of waveforms of switching transistor $S_2/S_3$ driving, drain-source voltage $V_{ds2}/V_{ds3}$ and second filter inductor current $i_{L2}$ in the region B of FIG. 3.

FIG. 9 is a schematic view of a set of waveforms of switching transistor $S_2/S_3$ driving, drain-source voltage $V_{ds2}/V_{ds3}$ and second filter inductor current $i_{L2}$ in the region C of FIG. 3.

FIG. 10 is a schematic view of a set of waveforms of switching transistor $S_1/S_4$ driving, drain-source voltage $V_{ds1}/V_{ds4}$ and first filter inductor current $i_{L1}$ in the region D of FIG. 3.

FIG. 11 is a simulation control effect diagram using the reactive power regulation control method of the grid-connected inverter of FIG. 1 in the region A of FIG. 3.

FIG. 12 is a simulation control effect diagram using the reactive power regulation control method of the grid-connected inverter of FIG. 1 in the region B of FIG. 3.

FIG. 13 is a schematic structural diagram of a grid-connected inverter provided according to the first embodiment of the present application.

FIG. 14 is a flowchart diagram of a grid-connected inverter control method provided according to a second embodiment of the present application.

FIG. 15 is a system control diagram provided according to the second embodiment of the present application.

FIG. 16 is a schematic view of the PWM driving signal of the switching transistor for the grid-connected inverter in the second embodiment of the present application.

FIG. 17 is a schematic structural diagram of the grid-connected inverter provided according to the second embodiment of the present application.

FIG. 18a is a diagram illustrating the waveform of the grid-connected current before harmonic suppression of the grid-connected current according to the second embodiment of the present application.

FIG. 18b is a diagram illustrating the waveform of the grid-connected current after harmonic suppression of the grid-connected current according to the second embodiment of the present application.

FIG. 19 is a diagram illustrating the waveform of grid-connected current under the unity power factor operating condition and a set of measured waveforms of switching transistor $S_1/S_4$ driving and drain-source voltage $V_{ds1}/V_{ds4}$ according to the second embodiment of the present application.

FIG. 20 is a diagram illustrating the waveform of grid-connected current when the grid-connected current leads the grid voltage under the non-unity power factor operating condition, and a set of measured waveforms of switching transistor $S_1/S_4$ driving, drain-source voltage $V_{ds1}/V_{ds4}$, as well as switching transistor $S_2/S_3$ driving and drain-source voltage $V_{ds2}/V_{ds3}$ according to the second embodiment of the present application.

FIG. 21 is a diagram illustrating the waveform of grid-connected current when the grid-connected current lags the grid voltage under the non-unity power factor operating condition, and a set of measured waveforms of switching transistor $S_1/S_4$ driving, drain-source voltage $V_{ds1}/V_{ds4}$, as well as switching transistor $S_2/S_3$ driving and drain-source voltage $V_{ds2}/V_{ds3}$ according to the second embodiment of the present application.

## Detailed Description of Embodiments

To make the objectives, technical solutions and advantages of embodiments of the present application more apparent, the technical solutions of the embodiments of this application will be described clearly and completely with reference to the attached drawings illustrating the embodiments of this application. Obviously, the embodiments described herein are only a part of but not all of the embodiments of this application. All other embodiments that can be obtained by those of ordinary skill in the art from the embodiments of this application without making creative efforts shall fall within the scope of this application.

In addition, the technical features involved in various embodiments of the present application described below can be combined with each other as long as they do not conflict with each other.

It shall be noted that, the steps shown in the flowchart diagrams of the accompanying drawings may be executed in a computer system such as a set of computer-executable instructions, and although logical orders are shown in the flowchart diagrams, in some cases, the steps shown or described may be executed in a different order from those described here.

An embodiment of the present application provides a grid-connected inverter control method, which comprise the following steps:

Step A, acquiring a DC input voltage, a grid voltage and a grid-connected reference current;
Step B, determining a switching transistor operating at high frequency according to the polarity of the grid-connected reference current;
Step C, determining the current working mode of the grid-connected inverter according to the grid voltage and the polarity of the grid-connected reference current, the working mode including an inverter mode and a rectifier mode;
Step D, determining the switching period and the duty ratio of the switching transistor according to the DC input voltage, the grid voltage and a period calculation rule corresponding to the working mode, the period calculation rule being a calculation rule of the switching period meeting zero-voltage/valley-voltage switching conditions; and
Step E, controlling zero-voltage/valley-voltage switching of the switching transistor according to the switching period and the duty ratio of the switching transistor.

By adopting the method of the present application, the zero-voltage/valley-voltage switching of the switching transistor for the grid-connected inverter is realized, which effectively reduces the loss caused by the turn-on process of the switching transistor.

The grid-connected inverter control method of the embodiment of the present application may be applied to reactive power regulation and suppression of harmonic components of grid-connected current, which will be illustrated in the first embodiment and the second embodiment respectively.

**First embodiment**

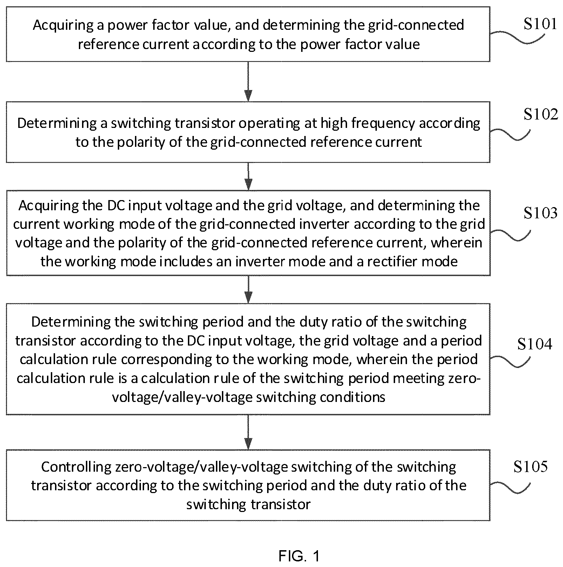

Referring to FIG. 1, there is shown a flowchart diagram of a grid-connected inverter control method according to the first embodiment of the present application, which is used for reactive power regulation. The grid-connected inverter control method may be applied to a controller of the grid-connected inverter, and the method specifically includes the following steps:

Step S101: acquiring a power factor value, and determining the grid-connected reference current according to the power factor value.

In AC circuits, the cosine of the phase difference ($\varphi$) between voltage and current is called a power factor, which is expressed by the symbol $\cos\varphi$. Numerically, the power factor is the ratio of active power to apparent power, i.e., $\cos\varphi = P/S$. In the embodiment of the present application, the power factor value is preset by the user. During reactive power regulation, the grid-connected inverter acquires the power factor value set by the user and calculates the grid-connected reference current based on the following equation:

$$i_{ref} = I_{ref}\sin(\omega t + \varphi) \qquad (1)$$

wherein $I_{ref}$ is the amplitude of the grid-connected reference current and $\omega t + \varphi$ is the phase of the grid-connected reference current.

Step S102, determining a switching transistor operating at high frequency according to the polarity of the grid-connected reference current.

For a grid-connected inverter, the waveform of the grid-connected reference current changes sinusoidally in a power frequency cycle. When the grid-connected reference current is positive, the switching transistor which makes the grid-connected reference current flow forward is controlled to operate at high frequency; and when the grid-connected reference current is negative, the switching transistor which makes the grid-connected reference current flow reversely is controlled to operate at high frequency.

Step S103: acquiring the DC input voltage and the grid voltage, and determining the current working mode of the grid-connected inverter according to the grid voltage and the polarity of the grid-connected reference current, wherein the working mode includes an inverter mode and a rectifier mode.

In the embodiment of the present application, the grid-connected inverter further comprises DC voltage sampling units and grid voltage sampling units, wherein the DC voltage sampling units are arranged at both sides of the DC voltage input source for collecting the DC input voltage in real time. The grid voltage sampling units are arranged at both sides of the grid voltage for collecting the grid voltage in real time. The controller of the grid-connected inverter acquires the DC input voltage and the grid voltage through the DC voltage sampling unit and the grid voltage sampling unit, and determines the current working mode of the grid-connected inverter according to the grid voltage and the polarity of the grid-connected reference current. Specifically, when the polarity of the grid voltage is the same as that of the grid-connected reference current or one of the grid voltage and the grid-connected reference current is zero, it is determined that the grid-connected inverter is in the inverter mode; and when the polarity of the grid voltage is opposite to that of the grid-connected reference current, it is determined that the grid-connected inverter is in the rectifier mode.

Step S104, determining the switching period and the duty ratio of the switching transistor according to the DC input voltage, the grid voltage and a period calculation rule corresponding to the working mode, wherein the period calculation rule is a calculation rule of the switching period meeting zero-voltage/valley-voltage switching conditions.

In different working modes, the waveform data of the drain-source voltage across the switching transistor operating at high frequency and the corresponding filter inductor current are different, which makes the calculation rules of the switching period meeting the zero-voltage/valley-voltage switching condition different in different working modes. The corresponding filter inductor current refers to the current generated on the corresponding filter inductor before the grid-connected current generated by the switching transistor operating at high frequency flows into the grid.

In the embodiment of the present application, firstly, according to a set of waveform data of the drain-source voltage across the switching transistor operating at high frequency and the corresponding filter inductor current in a switching period in each working mode, the start/end time point of the switching period meeting the zero-voltage/valley-voltage switching condition in each working mode is determined; then, based on the start/end time point of the switching period in each working mode, the calculation rule of the switching period corresponding to each working mode is determined by Kirchhoff's voltage and current law. Specifically, firstly, the time point where the filter inductor current and the drain-source voltage are both zero or at valley values is found in the set of waveform data, and then each of the stages included in the switching period and the calculation rules of each of the stages are determined based on the found time point, and then the calculation rule of the switching period $T_s$ is obtained according to the calculation rules of each of the stages.

After calculation and analysis, the parameter information involved in the calculation rule of the switching period includes DC input voltage and grid voltage. Preferably, the calculation rule of the switching period corresponding to each working mode, after being determined, is fixed in the controller of the grid-connected inverter. After the controller determines the current working mode of the grid-connected inverter, the switching period and the duty ratio of the switching transistor can be determined according to the DC input voltage, the grid voltage and the period calculation rule corresponding to the current working mode. In reactive power regulation, the duty ratio may also be obtained according to the calculation rule of the switching period. Specifically, the duty ratio=the on-time of the switching transistor/the switching period.

Step S105, controlling zero-voltage/valley-voltage switching of the switching transistor according to the switching period and the duty ratio of the switching transistor.

The controller of the grid-connected inverter determines the corresponding switching period and duty ratio according to the current working mode, and controls the zero-voltage or valley-voltage switching of the switching transistor operating at high frequency in this working mode.

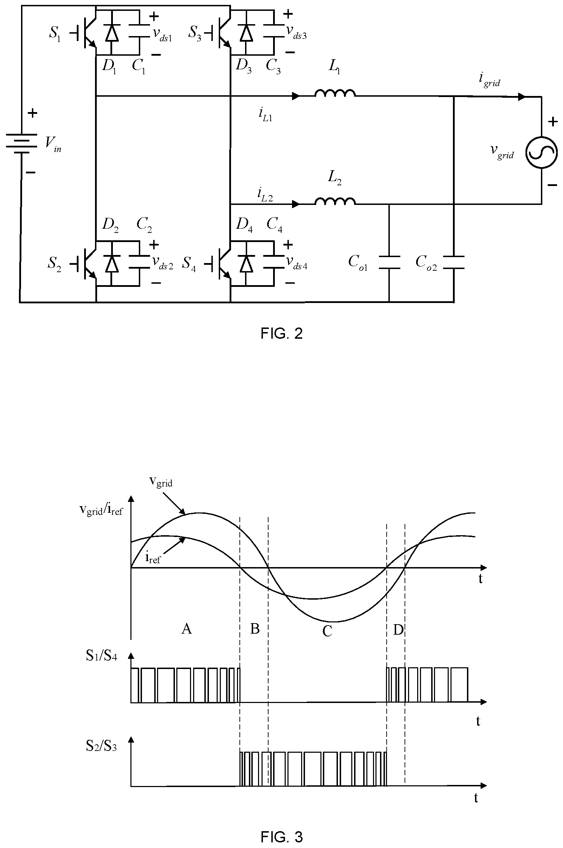

Next, the process flow for implementing the reactive power regulation control method of the grid-connected inverter will be explained in detail by taking the grid-connected inverter shown in FIG. 2 as an example. As shown in FIG. 2, which is a schematic view of the topological structure of the grid-connected inverter according to the embodiment of the present application, the grid-connected inverter comprises a DC voltage input source, switching transistors $S_1$ to $S_4$, and body diodes $D_1$ to $D_4$ and output capacitors $C_1$ to $C_4$ connected in parallel with the switching transistors $S_1$ to $S_4$, a filter inductor $L_1$ and a filter capacitor $C_{o2}$ connected to the bridge arm where the switching transistor $S_1/S_2$ is located, a filter inductor $L_2$ and a filter capacitor $C_{o1}$ connected to the bridge arm where the switching transistor $S_3/S_4$ is located, and a grid Grid. In order to keep the topological symmetry, models of the filter inductors $L_1$ and $L_2$ are the same, and models of the output capacitors $C_1$ to $C_4$ are also the same. That is, $L_1 = L_2 = L$, and $C_1 = C_2 = C_3 = C_4 = C$. L is the inductance of the filter inductor, and C is the capacitance of the output capacitor.

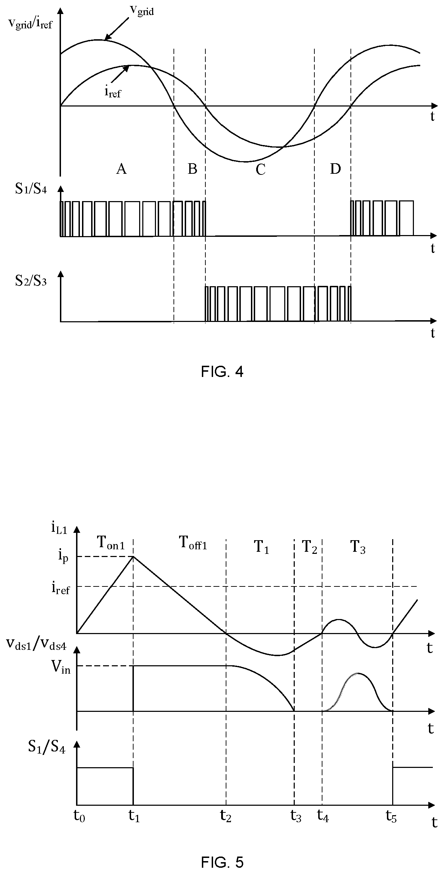

Referring to FIG. 3 and FIG. 4, FIG. 3 is a schematic view of PWM driving signals of switching transistors of the grid-connected inverter in FIG. 2 when the grid-connected reference current leads the grid voltage; and FIG. 4 is a schematic view of PWM driving signals of switching transistors of the grid-connected inverter in FIG. 2 when the grid-connected reference current lags the grid voltage. When the grid-connected reference current $i_{ref} \geq 0$, the switching transistor $S_1/S_4$ operates at high frequency, while the switching transistor $S_2/S_3$ remains turned off. At this time, the current flows from the positive pole of the DC voltage input source to the positive pole of the grid Grid through the switching transistor $S_1$ and the filter inductor $L_1$, and then returns to the negative pole of the DC voltage input source through the negative pole of the grid Grid, the filter inductor $L_2$ and the switching transistor $S_4$. When the grid-connected reference current $i_{ref} < 0$, the switching transistor $S_2/S_3$ operates at high frequency, while the switching transistor $S_1/S_4$ remains turned off. At this time, the current flows from the positive pole of the DC voltage input source to the negative pole of the grid Grid through the switching transistor $S_3$ and the filter inductor $L_2$, and then returns to the negative pole of the DC voltage input source through the positive pole of the grid Grid, the filter inductor $L_1$ and the switching transistor $S_2$. As can be seen from FIG. 3 and FIG. 4, the pulse width of the high-frequency pulse width modulation (PWM) driving signal for driving the switching transistor changes in a sinusoidal manner.

The reactive power regulation control method of the grid-connected inverter in FIG. 2 is explained by taking the case where the grid-connected reference current leads the grid voltage in FIG. 3 as an example. As shown in FIG. 3, according to the grid voltage $V_{grid}$ and the polarity of the grid-connected reference current $i_{ref}$, a power frequency cycle may be divided into four regions of A, B, C and D. In regions A and C, $i_{ref} \times V_{grid} \geq 0$, and the grid-connected inverter operates in the inverter mode; while in regions B and D, $i_{ref} \times V_{grid} < 0$, and the grid-connected inverter operates in the rectifier mode.

Referring to FIG. 5, there is shown a schematic view of the first set of waveforms of switching transistor $S_1/S_4$ driving, drain-source voltage $V_{ds1}/V_{ds4}$ and first filter inductor current $i_{L1}$ in the region A of FIG. 3. In the region A, $i_{ref} \geq 0$, and thus, the switching transistor $S_1/S_4$ operates at high frequency, the switching transistor $S_2/S_3$ remains turned off, and the grid-connected current passes through the filter inductor $L_1$ to generate the first filter inductor current $i_{L1}$ before flowing into the grid. As shown in FIG. 5, a switching period in the region A may include the following five stages.

(1) Switching transistor on-stage $T_{on1}$

The switching transistor on-stage $T_{on1}$ starts at time $t_0$ and ends at time $t_1$. Specifically, at the time $t_0$, the switching transistors $S_1/S_4$ are turned on, and the first filter inductor current $i_{L1}$ linearly increases from zero; and at the time $t_1$, $S_1/S_4$ are turned off, and $i_{L1}$ increases to the current peak $i_p$. Because the switching transistor $S_1/S_4$ is continuously in the on state, the drain-source voltage $V_{ds1} = V_{ds4} = 0$. According to Kirchhoff's voltage and current law, the equation for the calculation of $T_{on1}$ is:

$$T_{on1} = \frac{2Li_{p1}}{V_{in}-V_{grid}} \qquad (2)$$

$$i_{p1} = i_{ref} + \sqrt{i_{ref}^2 + \frac{i_{ref}(T_1+T_2+nT_3)\left(V_{in}^2 - V_{grid}^2\right)}{2LV_{in}}}$$

In the equation (2), , wherein $i_{p1}$ is the peak value of the first filter inductor current $i_{L1}$, $V_{in}$ is the DC input voltage, $V_{grid}$ is the grid voltage, L is the inductance of the filter inductor and C is the capacitance of the output capacitor.

(2) Switching transistor off-stage $T_{off1}$

The switching transistor off-stage $T_{off1}$ starts from time $t_1$ and ends at time $t_2$. Specifically, at the time $t_1$, $i_{L1}$ charges the output capacitor $C_1/C_4$ of $S_1/S_4$, $V_{ds1}/V_{ds4}$ rises to $V_{in}$, $i_{L1}$ decreases linearly from $i_p$, and $i_{L1}$ reduces to zero at the time $t_2$. Within the time period $T_{off1}$, $V_{ds1}/V_{ds4}$ remains constant at $V_{in}$. According to Kirchhoff's voltage and current law, the equation for the calculation of $T_{off1}$ is:

$$T_{off1} = \frac{2Li_{p1}}{V_{in}+V_{grid}} \qquad (3)$$

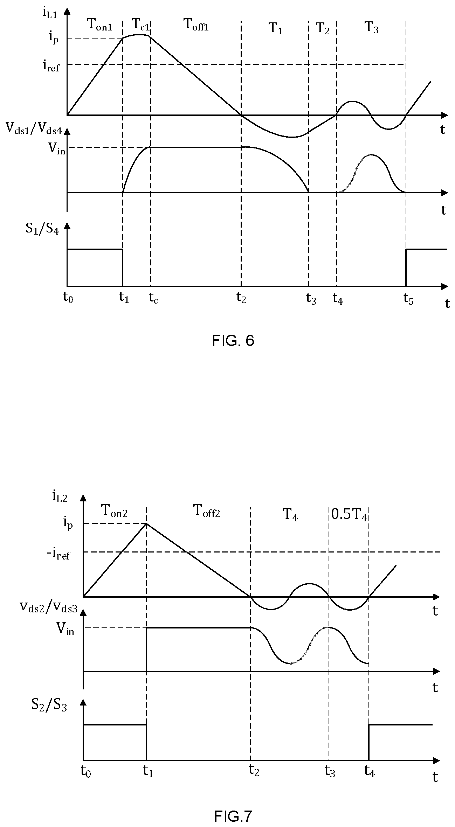

It shall be noted that a charging stage $T_{C1}$ for the output capacitor $C_1/C_4$ may also be included before the switching transistor off-stage $T_{off1}$. Because the duration of the stage $T_{C1}$ is almost negligible, it is not included in the calculation of switching period in some embodiments in order to simplify the operation during reactive power regulation. In some other embodiments, in order to get a more accurate switching period, the duration of the stage $T_{C1}$ is included in the calculation of the switching period. Specifically, as shown in FIG. 6, the charging stage $T_{C1}$ for the output capacitor $C_1/C_4$ starts from time $t_1$ and ends at time $t_c$. At the time $t_1$, $i_{L1}$ charges the output capacitor $C_1/C_4$ of $S_1/S_4$, $V_{ds1}/V_{ds4}$ rises from zero, and at the time $t_c$, $V_{ds1} = V_{ds4} = V_{in}$. During this period, $i_{L1}$ approximately remains constant at $i_p$. According to Kirchhoff's voltage and current law, the equation for the calculation of $T_{c1}$ is:

$$T_{C1} = \frac{2LC}{2i_{ref}+\sqrt{\frac{C}{2L}}(V_{in}+V_{grid})} \qquad (4)$$

(3) First resonance stage

The first resonance stage $T_1$ starts from time $t_2$ and ends at time $t_3$. Specifically, at the time $t_2$, the inverter enters the first resonance stage, $L_1$, $C_1$ and $C_4$ form a resonance network, $i_{L1}$ is reversed and discharges $C_1/C_4$. At the time $t_3$, the voltage across $C_1/C_4$ is completely discharged to zero, that is, $V_{ds1} = V_{ds4} = 0$. According to Kirchhoff's voltage and current law, the equation for the calculation of $T_1$ is:

$$T_1 = \sqrt{2LC}\ \arccos\left(\frac{V_{grid}-V_{in}}{V_{grid}+V_{in}}\right) \qquad (5)$$

(4) Body diode clamping stage

The body diode clamping stage $T_2$ starts from time $t_3$ and ends at time $t_4$. Specifically, at the time $t_3$, $i_{L1}$ freewheels through the body diode $D_1/D_4$, and $V_{ds1}/V_{ds4}$ is clamped to zero by $D_1/D_4$, that is, $V_{ds1} = V_{ds4} = 0$. At the time $t_4$, $i_{L1}$ linearly rises to zero. According to Kirchhoff's voltage and current law, the equation for the calculation of $T_2$ is:

$$T_2 = \sqrt{2LC}\left(\frac{V_{in}+V_{grid}}{V_{in}-V_{grid}}\right)\sin\left(\frac{T_1}{\sqrt{2LC}}\right) \qquad (6)$$

(5) Second resonance stage

The second resonance stage $T_3$ starts from time $t_4$ and ends at time $t_5$. Specifically, at the time $t_4$, the inverter enters the second resonance stage, the amplitudes of $i_{L1}$ and $V_{ds1}/V_{ds4}$ vary sinusoidally with the resonance period. At the time $t_5$, both $i_{L1}$ and $V_{s1}/V_{s4}$ resonate to zero, and at this time, zero-voltage switching of $S_1/S_4$ can be realized. According to Kirchhoff's voltage and current law, the equation for the calculation of $T_3$ is:

$$T_3 = 2\pi\sqrt{2LC} \qquad (7)$$

As shall be appreciated, in the inverter mode, $i_{L1}$ and $V_{ds1}/V_{ds4}$ will keep cycling in the second resonance stage without external intervention.

According to the variation curves of the drain-source voltage $V_{ds1}/V_{ds4}$ and the first filter inductor current $i_{L1}$ in each stage of a switching period in the inverter mode of FIG. 5, it can be known that the time when the drain-source voltage $V_{ds1}/V_{ds4}$ and the first filter inductor current $i_{L1}$ are both zero is the time corresponding to $t_4+nT_3$. n is the adjustment value of the switching period and is an integer greater than or equal to zero. At all of these time points, zero-voltage switching of $S_1/S_4$ can be realized. Therefore, in the inverter mode, the first switching period meeting the zero-voltage switching condition is $T_{s1} = T_{on1} + T_{off1} + T_1 + T_2 + nT_3$. Obviously, the minimum switching period $T_{s1}$ is $T_{on1} + T_{off1} + T_1 + T_2$. If the switching period is to be increased, then an appropriate value of n may be set according to the actual needs.

Referring to FIG. 7, there is shown a schematic view of the first set of waveforms of switching transistor $S_2/S_3$ driving, drain-source voltage $V_{ds2}/V_{ds3}$ and second filter inductor current $i_{L2}$ in the region B of FIG. 3. In the region B, $i_{ref} < 0$, and thus, the switching transistor $S_2/S_3$ operates at high frequency, the switching transistor $S_1/S_4$ remains turned off, and the grid-connected current passes through the filter inductor $L_2$ to generate the second filter inductor current $i_{L2}$ before flowing into the grid. As shown in FIG. 7, a switching period in the region B may include the following three stages.

(1) Switching transistor on-stage $T_{on2}$

The switching transistor on-stage $T_{on2}$ starts from time $t_0$ and ends at time $t_1$. Specifically, at the time $t_0$, the switching transistor $S_2/S_3$ is turned on, and the second filter inductor current $i_{L2}$ linearly increases from zero. At the time $t_1$, $S_2/S_3$ is turned off, and $i_{L2}$ increases to the current peak $i_p$. Because the switching transistor $S_2/S_3$ is continuously in the on state, the drain-source voltage $V_{ds2} = V_{ds3} = 0$. According to Kirchhoff's voltage and current law, the equation for the calculation of $T_{on2}$ is:

$$T_{on2} = \frac{2L_{p2}}{V_{in}+V_{grid}} \qquad (8)$$

In the equation (8), $i_{p2} = -i_{ref} + \dfrac{\sqrt{16L^2V_{in}^2 i_{ref}^2 - 8LV_{in}i_{ref}(m+0.5)T_4\left(V_{in}^2-V_{grid}^2\right)}}{4LV_{in}}$ , wherein $i_{p2}$ is the peak value of the second filter inductor current $i_{L2}$, $V_{in}$ is the DC input voltage, $V_{grid}$ is the grid voltage, L is the inductance of the filter inductor and C is the capacitance of the output capacitor.

(2) Switching transistor off-stage $T_{off2}$

The switching transistor off-stage $T_{off2}$ starts from time $t_1$ and ends at time $t_2$. Specifically, at the time $t_1$, $i_{L2}$ charges the output capacitor $C_2/C_3$ of $S_2/S_3$, $V_{ds2}/V_{ds3}$ rises to $V_{in}$, and $i_{L2}$ decreases linearly from $i_p$. At the time $t_2$, $i_{L2}$ reduces to zero. Within the time period $T_{off2}$, $V_{ds2}/V_{ds3}$ remains constant at $V_{in}$. According to Kirchhoff's voltage and current law, the equation for the calculation of $T_{off2}$ is:

$$T_{off2} = \frac{2Li_{p2}}{V_{in}-V_{grid}} \qquad (9)$$

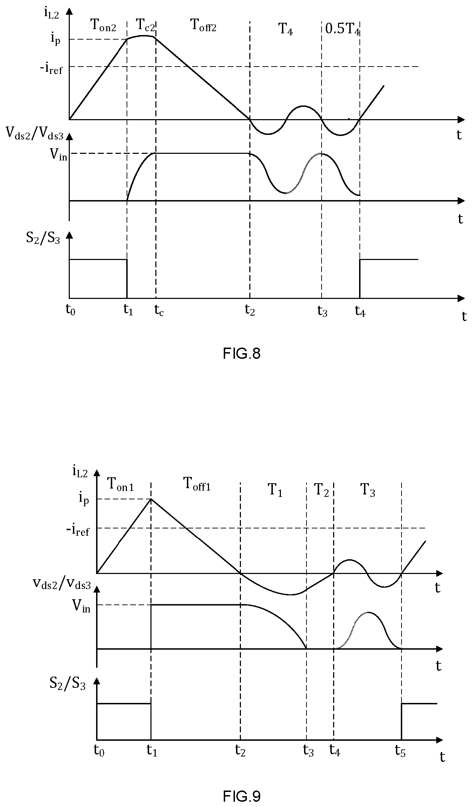

It shall be noted that a charging stage $T_{C2}$ for the output capacitor $C_2/C_3$ may also be included before the switching transistor off-stage $T_{off2}$. Because the duration of the stage $T_{C2}$ is almost negligible, it is not included in the calculation of switching period in some embodiments in order to simplify the operation during reactive power regulation. In some other embodiments, in order to get a more accurate switching period, the duration of the stage $T_{C2}$ is included in the calculation of the switching period. Specifically, as shown in FIG. 8, the charging stage $T_{C2}$ for the output capacitor $C_2/C_3$ starts from time $t_1$ and ends at time $t_c$. At the time $t_1$, $i_{L2}$ charges the output capacitor $C_2/C_3$ of $S_2/S_3$, $V_{ds2}/V_{ds3}$ rises from zero, and at the time $t_c$, $V_{ds2} = V_{ds3} = V_{in}$. During this period, $i_{L2}$ approximately remains constant at $i_p$ . According to Kirchhoff's voltage and current law, the equation for the calculation of $T_{c2}$ is:

$$T_{C2} = \frac{2LC}{2i_{ref}+\sqrt{\frac{C}{2L}(V_{in}-V_{grid})}} \qquad (10)$$

(3) Third resonance stage

The third resonance stage $T_4$ starts from time $t_2$ and ends at time $t_3$. Specifically, at the time $t_2$, the inverter enters the third resonance stage, and $L_2$, $C_2$ and $C_3$ form a resonance network. At $0.5T_4$, $V_{ds2}/V_{ds3}$ drops to the valley, and at this time, valley switching of $S_2/S_3$ can be realized. According to Kirchhoff's voltage and current law, the equation for the calculation of $T_4$ is:

$$T_4 = 2\pi\sqrt{2LC} \qquad (11)$$

As shall be appreciated, in the rectifier mode, $i_{L2}$ and $V_{ds2}/V_{ds3}$ will keep cycling in the third resonance stage without external intervention.

According to the variation curves of the drain-source voltage $V_{ds2}/V_{ds3}$ and the second filter inductor current $i_{L2}$ in each stage of a switching period in the rectifier mode of FIG. 7, it can be known that the time when the drain-source voltage $V_{ds2}/V_{ds3}$ is at the valley value and the second filter inductor current $i_{L2}$ is zero is the time corresponding to $t_2+(m+0.5)T_4$. m is the adjustment value of the switching period and is an integer greater than or equal to zero. At all of these times points, valley-voltage switching of $S_2/S_3$ can be realized. Therefore, in the rectifier mode, the second switching period meeting the valley-voltage switching condition is $T_{s2} = T_{on2} + T_{off2} + (m + 0.5)T_4$. Obviously, the minimum switching period $T_{s2}$ is $T_{on2} + T_{off2} + 0.5T_4$. If the switching period is to be increased, then an appropriate value of m may be set according to the actual needs.

In the aforementioned equation, the inductance L of the filter inductor and the capacitance C of the output capacitor may be approximately constant values, and for example, the inductance L is equal to the rated inductance Lrated, and the capacitance C of the output capacitor is equal to the rated capacitance Crated. In some embodiments, in order to simplify the calculation, fixed inductance L of the filter inductor and capacitance C of the output capacitor are preset in the controller of the grid-connected inverter.

In other embodiments, in order to obtain a more accurate capacitance C of the output capacitor, the mapping relationship between the capacitance C of the output capacitor and the voltage difference between the DC input voltage $V_{in}$ and the grid voltage $V_{grid}$ can be determined, and then the changing capacitance C of the output capacitor can be determined according to the real-time voltage difference. As can be known from FIG. 5, in the inverter mode, the drain-source voltages $V_{ds1}$ and $V_{ds4}$ of the switching transistors $S_1/S_4$ are always equal throughout the whole switching period $T_{s1}$, that is, the voltages $V_{c1}$ and $V_{c4}$ of the output capacitors $C_1/C_4$ are always equal. Because the capacitance C of the output capacitor of the switching transistor changes with the voltage $V_c$ across the capacitor, i.e., the capacitance C is a function of voltage $V_c$. That is, $C = f_1(V_c)$. Therefore, the second resonance stage $T_3$ may be expressed as:

$$T_3 = 2\pi\sqrt{2Lf_1(V_c)} \qquad (12)$$

While in the second resonance period $T_3$, $V_{c1}$ and $V_{c4}$ are positively correlated with the pressure difference $V_{in}$ - $V_{grid}$, which may be expressed as:

$$V_{C1} = V_{C4} = f_2(V_{in} - V_{grid}) \qquad (13)$$

Therefore, $T_3$ may be further expressed as:

$$T_3 = 2\pi\sqrt{2Lf_3(V_{in} - V_{grid})} \qquad (14)$$

As can be seen from the above equation, when the time period $T_3$ is known, C can be uniquely determined. In one embodiment of the present application, the mapping relationship $C = f_3(V_{in}$ - $V_{grid})$ between the capacitance C of the output capacitor and the voltage difference between the DC input voltage $V_{in}$ and the grid voltage $V_{grid}$ is determined by the following method:

firstly, based on multiple sets of waveform data of the drain-source voltage across the switching transistor operating at high frequency and the corresponding filter inductor current in different switching periods in the inverter mode, measuring $T_3$ under conditions of different DC input voltages $V_{in}$ and different grid voltages $V_{grid}$ and reversely calculating the capacitance C of the corresponding output capacitor according to the measured $T_3$ by using the equation;

secondly, by taking the difference $(V_{in}-V_{grid})$ between the different DC input voltages $V_{in}$ and the different grid voltages $V_{grid}$ as input and taking the capacitance C of the output capacitor calculated according to the different DC input voltages $V_{in}$ and the different grid voltages $V_{grid}$ as output, obtaining the mapping relationship $C = f_3 (Vi_n - V_{grid})$ between the capacitance C of the output capacitor and the voltage difference between the DC input voltage $V_{in}$ and the grid voltage $V_{grid}$ by polynomial fitting.

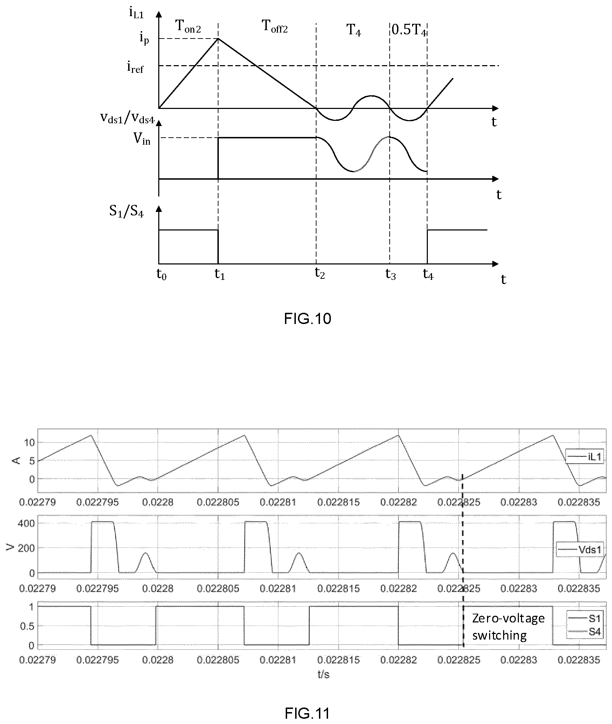

Referring to FIG. 9 and FIG. 10, FIG. 9 is a schematic view of a set of waveforms of switching transistor $S_2/S_3$ driving, drain-source voltage $V_{ds2}/V_{ds3}$ and second filter inductor current $i_{L2}$ in the region C of FIG. 3, and FIG. 10 is a schematic view of a set of waveforms of switching transistor $S_1/S_4$ driving, drain-source voltage $V_{ds1}/V_{ds4}$ and first filter inductor current $i_{L1}$ in the region D of FIG. 3.

The region C is in the inverter mode, $i_{ref} < 0$, and thus, the switching transistor $S_2/S_3$ operates at high frequency, the switching transistor $S_1/S_4$ remains turned off, and the grid-connected current passes through the filter inductor $L_2$ to generate the second filter inductor current $i_{L2}$ before flowing into the grid. The variation curves of the drain-source voltage $V_{ds2}/V_{ds3}$ and the second filter inductor current $i_{L2}$ in the region C are the same as those of the drain-source voltage $V_{ds1}/V_{ds4}$ and the first filter inductor current $i_{L1}$ in the region A, respectively, and thus, the switching period in the region C is the same as the switching period in the region A.

The region D is in the rectifier mode, $i_{ref} \geq 0$, and thus the switching transistor $S_1/S_4$ operates at high frequency, the switching transistor $S_2/S_3$ remains turned off, and the grid-connected current passes through the filter inductor $L_1$ to generate the first filter inductor current $i_{L1}$ before flowing into the grid. The variation curves of the drain-source voltage $V_{ds1}/V_{ds4}$ and the first filter inductor current $i_{L1}$ in the region D are the same as those of the drain-source voltage $V_{ds2}/V_{ds3}$ and the second filter inductor current $i_{L2}$ in the region B, respectively, and thus, the switching period in the region D is the same as the switching period in the region B.

So far, the calculation rules of the switching periods corresponding to four regions A, B, C and D in a power frequency cycle when the grid-connected reference current leads the grid voltage are obtained. In the regions A and C, the grid-connected inverter is in the inverter mode, and the two regions correspond to the calculation rule of the first switching period $T_{s1}$. In the regions B and D, the grid-connected inverter is in the rectifier mode, and the two regions correspond to the calculation rule of the second switching period $T_{s2}$. The calculation rule of the switching period when the grid-connected reference current lags the grid voltage is correspondingly the same as the calculation rule of the switching period when the grid-connected reference current leads the grid voltage, and the analysis and calculation process are similar, so this will not be further described herein. Therefore, the calculation rule of the first switching period $T_{s1}$ meeting the zero-voltage switching condition in the inverter mode for the grid-connected inverter in FIG. 2 is as follows:

$$\begin{cases} T_{s1} = T_{on1} + T_{off1} + T_1 + T_2 + nT_3 \\[2mm] T_{on1} = \dfrac{2Li_{p1}}{V_{in} - V_{grid}} \\[2mm] T_{off1} = \dfrac{2Li_{p1}}{V_{in} + V_{grid}} \\[2mm] T_1 = \sqrt{2LC} \arccos\left(\dfrac{V_{grid} - V_{in}}{V_{grid} + V_{in}}\right) \\[2mm] T_2 = \sqrt{2LC}\left(\dfrac{V_{in} + V_{grid}}{V_{in} - V_{grid}}\right)\sin\left(\dfrac{T_1}{\sqrt{2LC)}}\right) \\[2mm] T_3 = 2\pi\sqrt{2LC} \end{cases}$$

$$i_{p1} = i_{ref} + \sqrt{i_{ref}^2 + \frac{i_{ref}(T_1 + T_2 + nT_3)\left(V_{in}^2 - V_{grid}^2\right)}{2L_{in}}}$$

wherein , $i_{p1}$ is the peak value of the filter inductor current in the inverter mode, $V_{in}$ is the DC input voltage, $V_{grid}$ is the grid voltage, L is the inductance of the filter inductor, C is the capacitance of the output capacitor, and n is the adjustment value of the first switching period and is an integer greater than or equal to zero. According to the calculation rule of the first switching period $T_{s1}$, the first duty ratio $duty_1$ meeting the zero-voltage switching condition in the inverter mode for the grid-connected inverter in FIG. 2 is obtained specifically as follows:

$$duty_1 = \frac{T_{on1}}{T_{on1} + T_{off1} + T_1 + T_2 + nT_3} \tag{15}$$

The calculation rule of the second switching period $T_{s2}$ meeting the valley-voltage switching condition in the rectifier mode for the grid-connected inverter in FIG. 2 is:

$$\begin{cases} T_{s2} = T_{on2} + T_{off2} + (m + 0.5)T_4 \\[2mm] T_{on2} = \dfrac{2Li_{p2}}{V_{in} + V_{grid}} \\[2mm] T_{off2} = \dfrac{2Li_{p2}}{V_{in} - V_{grid}} \\[2mm] T_4 = 2\pi\sqrt{2LC} \end{cases}$$

$$i_{p2} = -i_{ref} + \frac{\sqrt{16L^2V_{in}^2 i_{ref}^2 - 8LV_{in}i_{ref}(m+0.5)T_4\left(V_{in}^2 - V_{grid}^2\right)}}{4L_{in}}$$

wherein, , $i_{p2}$ is the peak value of the filter inductor current in the rectifier mode, and m is the adjustment value of the second switching period and is an integer greater than or equal to zero. According to the calculation rule of the second switching period $T_{s2}$, the second duty ratio $duty_2$ meeting the valley-voltage switching condition in the rectifier mode for the grid-connected inverter in FIG. 2 is obtained specifically as follows:

$$duty_2 = \frac{T_{on2}}{T_{on2} + T_{off2} + (m+0.5)T_4} \tag{16}$$

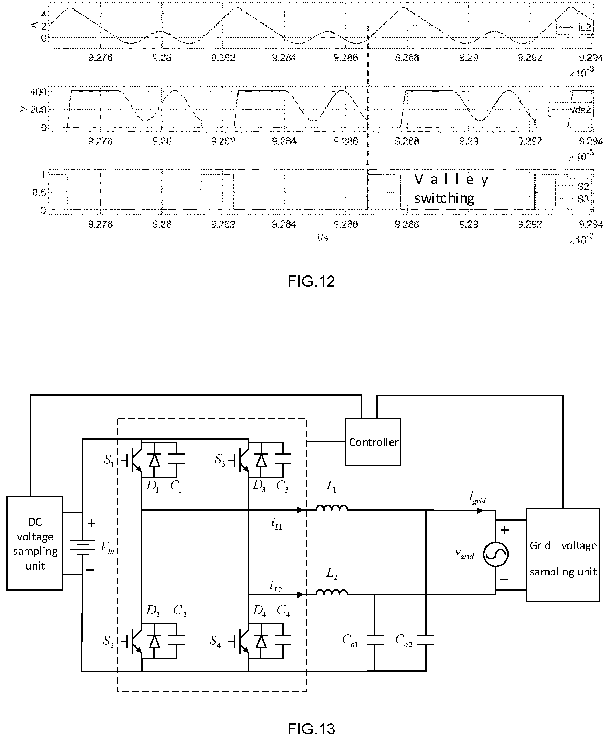

Referring to FIG. 11 and FIG. 12, FIG. 11 is a simulation control effect diagram using the reactive power regulation control method for the grid-connected inverter of FIG. 1 in the region A of FIG. 3; and FIG. 12 is a simulation control effect diagram using the reactive power regulation control method for the grid-connected inverter of FIG. 1 in the region B of FIG. 3. As can be seen from FIG. 11 and FIG. 12, the zero-voltage/valley-voltage switching of the switching transistor can be realized by adopting the reactive power regulation control method for the grid-connected inverter of the present application.

For the reactive power regulation control method of the grid-connected inverter provided according to the embodiment of the present application, firstly, a power factor value is acquired to determine a grid-connected reference current, and a switching transistor operating at high frequency is determined according to the polarity of the grid-connected reference current; then the DC input voltage and the grid voltage are acquired, and the current working mode of the grid-connected inverter is determined according to the grid voltage and the polarity of the grid-connected reference current; and finally, the switching period and the duty ratio of the switching transistor are determined according to the DC input voltage, the grid voltage and a period calculation rule corresponding to the current working mode, and the zero-voltage/valley-voltage switching of the switching transistor is controlled according to the switching period and the duty ratio of the switching transistor. By adopting the method of the present application, the zero-voltage/valley-voltage switching of the switching transistor during the reactive power regulation of the grid-connected inverter is realized, and the loss caused by the turn-on process of the switching transistor is effectively reduced.

According to the first embodiment of the present application, a grid-connected inverter is provided, which comprises an inverter circuit and a controller. The controller is configured to: acquire a power factor value, determine a grid-connected reference current according to the power factor value, determine a switching transistor operating at high frequency according to the polarity of the grid-connected reference current, acquire a DC input voltage and a grid voltage, determine the current working mode of the grid-connected inverter according to the grid voltage and the polarity of the grid-connected reference current, the working mode including an inverter mode and a rectifier mode; determine the switching period and the duty ratio of the switching transistor according to the DC input voltage, the grid voltage and the period calculation rule corresponding to the working mode, wherein the period calculation rule is the calculation rule of the switching period meeting the preset zero-voltage/valley-voltage switching condition; and control the zero-voltage/valley-voltage switching of the switching transistor according to the switching period and the duty ratio of the switching transistor.

As shown in FIG. 13, which is a schematic structural diagram of a grid-connected inverter provided according to the embodiment of the present application, the grid-connected inverter comprises a DC voltage input source, switching transistors $S_1$ to $S_4$, and body diodes $D_1$ to $D_4$ and output capacitors $C_1$ to $C_4$ connected in parallel with the switching transistors, a filter inductor $L_1$ and a filter capacitor $C_{o2}$ connected to the bridge arm where the switching transistor $S_1/S_2$ is located, a filter inductor $L_2$ and a filter capacitor $C_{o1}$ connected to the bridge arm where the switching transistor $S_3/S_4$ is located, a grid Grid, DC voltage sampling units, grid voltage sampling units and a controller.

The DC voltage sampling units are arranged at both sides of the DC voltage input source for collecting the DC input voltage in real time; and the grid voltage sampling units are arranged at both sides of the grid voltage for collecting the grid voltage in real time. The controller of the grid-connected inverter acquires the DC input voltage and the grid voltage through the DC voltage sampling unit and the grid voltage sampling unit.

In the embodiment of the present application, based on the topological structure of the grid-connected inverter shown in FIG. 13, the waveform data of the drain-source voltage across the switching transistor operating at high frequency and the corresponding filter inductor current in the inverter mode and the rectifier mode are analyzed respectively, and the calculation rule of the first switching period $T_{s1}$ meeting the zero-voltage switching condition in the inverter mode can be determined as follows:

$$T_{s1} = T_{on1} + T_{off1} + T_1 + T_2 + nT_3$$

$$T_{on1} = \frac{2Li_{p1}}{V_{in} - V_{grid}}$$

$$T_{off1} = \frac{2Li_{p1}}{V_{in} + V_{grid}}$$

$$T_1 = \sqrt{2LC} \arccos\left(\frac{V_{grid} - V_{in}}{V_{grid} + V_{in}}\right)$$

$$T_2 = \sqrt{2LC}\left(\frac{V_{in} + V_{grid}}{V_{in} - V_{grid}}\right)\sin\left(\frac{T_1}{\sqrt{2LC}}\right)$$

$$T_3 = 2\pi\sqrt{2LC}$$

and the calculation rule of the second switching period $T_{s2}$ meeting the valley-voltage switching condition in the rectifier mode can be determined as follows:

$$\begin{cases} T_{s2} = T_{on2} + T_{off2} + (m + 0.5)T_4 \\ T_{on2} = \dfrac{2Li_{p2}}{V_{in} + V_{grid}} \\ T_{off2} = \dfrac{2Li_{p2}}{V_{in} - V_{grid}} \\ T_4 = 2\pi\sqrt{2LC} \end{cases}$$

$$i_{p1} = i_{ref} + \sqrt{i_{ref}^2 + \frac{i_{ref}(T_1 + T_2 + nT_3)\left(V_{in}^2 - V_{grid}^2\right)}{2LV_{in}}}$$

wherein, $i_{p2} = i_{ref} +$

$$\frac{\sqrt{16\ ^2V_{in}^2 i_{ref}^2 - 8LV_{in}i_{ref}(m+0.5)T_4\left(V_{in}^2 - V_{grid}^2\right)}}{4LV_{in}}$$

, $i_{p1}$ is the peak value of the filter inductor current in the inverter mode, $i_{p2}$ is the peak value of filter inductor current in the rectifier mode, $V_{in}$ is the DC input voltage, $V_{grid}$ is the grid voltage, L is the inductance of the filter inductor, and C is the capacitance of the output capacitor.

In the embodiment of the present application, the controller is further configured to determine that the grid-connected inverter is in the inverter mode when the polarity of the grid voltage is the same as that of the grid-connected reference current or one of the grid voltage and the grid-connected reference current is zero, and determine that the grid-connected inverter is in the rectifier mode when the polarity of the grid voltage is opposite to that of the grid-connected reference current.

The controller of the grid-connected inverter in the embodiment of the present application can execute any reactive power regulation control method of the grid-connected inverter described in the first embodiment, and has functional modules and benefits corresponding to the method. For technical details not elucidated in the embodiments, reference may be made to the reactive power regulation control method of the grid-connected inverter provided in the first embodiment of the present application.

**Second embodiment**

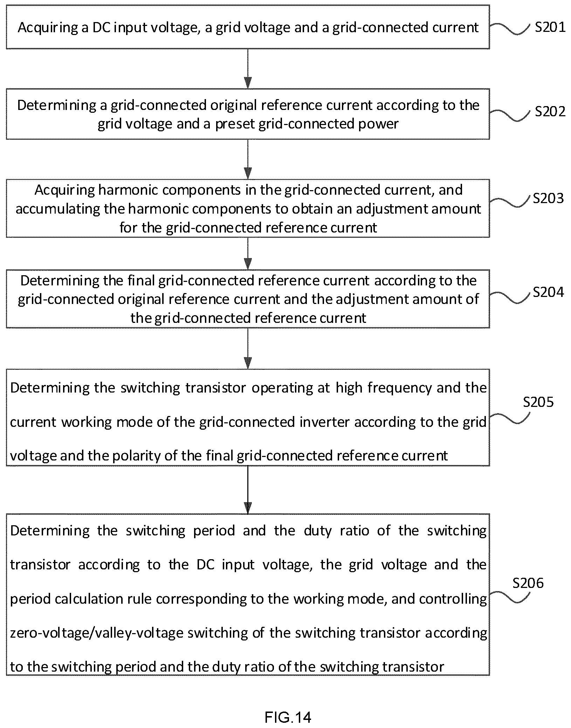

Referring to FIG. 14, there is shown a flowchart diagram of a grid-connected inverter control method provided according to a second embodiment of the present invention, which may be used to suppress harmonic components. The grid-connected inverter control method may be applied to a controller of the grid-connected inverter, and the method specifically includes the following steps:

Step S201, acquiring a DC input voltage, a grid voltage and a grid-connected current.

In the embodiment of the present invention, the grid-connected inverter further comprises DC voltage sampling units, grid voltage sampling units and a grid-connected current sampling unit. The DC voltage sampling units are arranged at both sides of the DC voltage input source for collecting the DC input voltage in real time. The grid voltage sampling units are arranged at both sides of the grid voltage for collecting the grid voltage in real time. The grid-connected current sampling unit is arranged at the current output side of the inverter for collecting the grid-connected current in real time. In each switching period, the controller of the grid-connected inverter acquires the DC input voltage, the grid voltage and the grid-connected current in real time through the DC voltage sampling units, the grid voltage sampling units and the grid-connected current sampling unit.

Step S202, determining a grid-connected original reference current according to the grid voltage and a preset grid-connected power.

Firstly, according to the grid-connected power set by the user and the sampled grid voltage, the amplitude of the grid-connected original reference current is calculated with the equation as follows:

$$I_{ref} = \sqrt{2}\,\frac{P}{V_{grid}} \qquad (17)$$

The grid-connected original reference current varies depending on whether the grid-connected inverter operates under the condition of unity power factor or non-unity power factor specifically as follows.

If the grid-connected inverter operates at the unity power factor, then the grid-connected original reference current may be expressed as:

$$i_{ref0} = I_{ref}\sin(\omega t) \qquad (18\text{-}1)$$

If the grid-connected inverter operates at the non-unity power factor, then the grid-connected original reference current may be expressed as:

$$i_{ref0} = I_{ref}\sin(\omega t + \varphi) \qquad (18\text{-}2)$$

wherein, $\omega t + \varphi$ is the phase of the grid-connected reference current. The cosine of the phase difference ($\varphi$) between voltage and current is the power factor, which is represented by the symbol $\cos\varphi$ and usually set by the user in advance.

Step S203, acquiring harmonic components in the grid-connected current, and accumulating the harmonic components to obtain an adjustment amount for the grid-connected reference current.

In the embodiment of the present invention, the harmonic component $i_{inv(n)}$ in the actual grid-connected current $i_{grid}$ is acquired through a band-pass filter, and the equation for the calculation of the harmonic component $i_{inv(n)}$ is as follows:

$$\begin{cases} i_{inv(n)} = i_{inv}G_{BPFn}(s) \\ G_{BPFn}(s) = \dfrac{\xi\omega_n s}{s^2 + \xi\omega_n s + \omega_n^2} \end{cases} \qquad (19)$$

wherein, $i_{inv}$ is the inverter current of the grid-connected inverter, $i_{inv} = i_{grid}$; and the transfer function $G_{BPFn}(s)$ describes the response of the system to input signals with different frequencies. In this case, s is a complex variable, which is usually written as $s = j\omega$. j is the imaginary part of the complex number, $\omega$ is usually interpreted as the angular frequency of the input signal, i.e., the inverter current signal, and $\omega$ is a parameter representing the whole frequency range instead of referring to a specific angular frequency; $\xi$ is the damping coefficient; $\omega_n$ is the angular frequency of the n-th harmonic, $\omega_n = 2\pi \times n \times f_0$, and $f_0$ is the frequency of grid voltage.

Further, the harmonic components of the grid-connected current are accumulated to obtain the adjustment amount for the grid-connected reference current in DCM control calculation:

$$\Delta i_{ref} = \sum_2^n i_{inv(n)}, {}_{n\in[2,\infty)} \qquad (20)$$

wherein, n is the order of the harmonic extracted from the grid-connected current.

Step S204, determining the final grid-connected reference current according to the grid-connected original reference current and the adjustment amount of the grid-connected reference current.

Under normal circumstances, in the grid-connected current signal, the lower the order of the harmonic is, the greater the amplitude of the harmonic will be. In order to simplify the calculation, in the embodiment, the cumulative sum of the second to fifth harmonics is taken as the adjustment amount of the grid-connected reference current:

$$\Delta i_{ref} = i_{inv2} + i_{inv3} + i_{inv4} + i_{inv5} \qquad (21)$$

In the embodiment of the present invention, the value obtained by subtracting the adjustment amount of the grid-connected reference current from the grid-connected original reference current is taken as the final grid-connected reference current:

$$i_{ref} = i_{ref0} - \Delta i_{ref} \qquad (22)$$

Step S205, determining the switching transistor operating at high frequency and the current working mode of the grid-connected inverter according to the grid voltage and the polarity of the final grid-connected reference current.

In the embodiment of the present invention, the method for determining the switching transistor operating at high frequency is as follows: when the final grid-connected reference current is positive, controlling the switching transistor which makes the final grid-connected reference current flow forward to operate at high frequency; and when the final grid-connected reference current is negative, controlling the switching transistor which makes the final grid-connected reference current flow reversely to operate at high frequency.

In the embodiment of the present application, the working mode includes an inverter mode and a rectifier mode, and the method for determining the current working mode of the grid-connected inverter is as follows: determining that the grid-connected inverter is in the inverter mode when the polarity of the grid voltage is the same as that of the final grid-connected reference current or one of the grid voltage and the final grid-connected reference current is zero; and determining that the grid-connected inverter is in the rectifier mode when the polarity of the grid voltage is opposite to that of the final grid-connected reference current.

Step S206, determining the switching period and the duty ratio of the switching transistor according to the DC input voltage, the grid voltage and the period calculation rule corresponding to the working mode, and controlling zero-voltage/valley-voltage switching of the switching transistor according to the switching period and the duty ratio of the switching transistor.

In the embodiment of the present application, the period calculation rule is a calculation rule of the switching period meeting zero-voltage/valley-voltage switching conditions. In different working modes, the waveform data of the drain-source voltage across the switching transistor operating at high frequency and the corresponding filter inductor current are different, so that the calculation rules of the switching period meeting the zero-voltage/valley-voltage switching condition in different working modes are different. The corresponding filter inductor current refers to the current generated on the corresponding filter inductor before the grid-connected current generated by the switching transistor operating at high frequency flows into the grid.

In the embodiment of the present application, firstly, according to a set of waveform data of the drain-source voltage across the switching transistor operating at high frequency and the corresponding filter inductor current in a switching period in each working mode, the start/end time point of the switching period meeting the zero-voltage/valley-voltage switching condition in each working mode is determined; then, based on the start/end time point of the switching period in each working mode, the calculation rule of the switching period corresponding to each working mode is determined by Kirchhoff's voltage and current law. Specifically, firstly, the time point where the filter inductor current and the drain-source voltage are both zero or at valley values is found out in the set of waveform data, and then each of the stages included in the switching period and the calculation rules of each of the stages are determined based on the found time point, and then the calculation rule of the switching period $T_s$ is obtained according to the calculation rules of each of the stages.

After calculation and analysis, the parameter information involved in the calculation rule of the switching period includes DC input voltage and grid voltage. Preferably, the calculation rule of the switching period corresponding to each working mode, after being determined, is fixed in the controller of the grid-connected inverter. After the controller determines the current working mode of the grid-connected inverter, the switching period and the duty ratio of the switching transistor can be determined according to the DC input voltage, the grid voltage and the period calculation rule corresponding to the current working mode. Moreover, the duty ratio may also be obtained according to the calculation rule of the switching period: the duty ratio=the on-time of the switching transistor/the switching period. After determining the corresponding switching period and duty ratio according to the current working mode, the controller of the grid-connected inverter controls the zero-voltage or valley-voltage switching of the switching transistor operating at high frequency in this working mode.

The topological structure of the grid-connected inverter in this embodiment (the second embodiment) is the same as that in the first embodiment, and the process flow for implementing the grid-connected inverter control method will be explained in detail hereinafter by taking the grid-connected inverter shown in FIG. 2 as an example. As shown in FIG. 2, which is a schematic view of the topological structure of the grid-connected inverter according to the embodiment of the present application, the grid-connected inverter comprises a DC voltage input source, switching transistors $S_1$ to $S_4$, and body diodes $D_1$ to $D_4$ and output capacitors $C_1$ to $C_4$ connected in parallel with the switching transistors $S_1$ to $S_4$, a filter inductor $L_1$ and a filter capacitor $C_{o2}$ connected to the bridge arm where the switching transistor $S_1/S_2$ is located, a filter inductor $L_2$ and a filter capacitor $C_{o1}$ connected to the bridge arm where the switching transistor $S_3/S_4$ is located, and a grid Grid. In order to keep the topological symmetry, models of the filter inductors $L_1$ and $L_2$ are the same, and models of the output capacitors $C_1$ to $C_4$ are also the same. That is, $L_1 = L_2 = L$, and $C_1 = C_2 = C_3 = C_4 = C$. L is the inductance of the filter inductor, and C is the capacitance of the output capacitor.

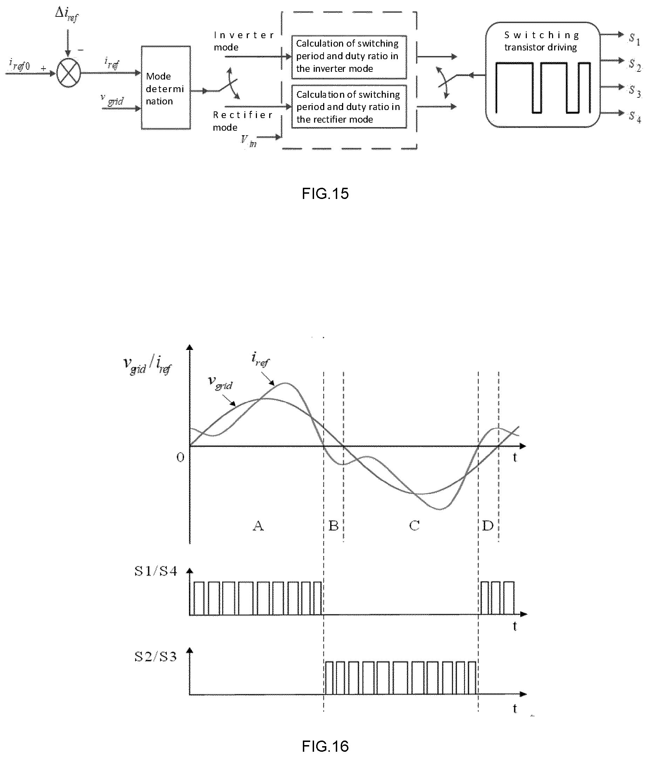

Referring to FIG. 15, there is shown a system control diagram provided according to an embodiment of the present application. Firstly, the adjustment amount $\Delta i_{ref}$ of the grid-connected reference current is subtracted from the grid-connected original reference current $i_{ref0}$ to get the final grid-connected reference current $i_{ref}$. Secondly, mode determination is made based on the final grid-connected reference current $i_{ref}$ and the grid voltage $V_{grid}$ so as to determine the current working mode of the grid-connected inverter. Then, based on different working modes, the switching period and the duty ratio in the respective working mode are calculated, and high-frequency operation and zero-voltage/valley-voltage switching of the corresponding switching transistor are driven according to the switching period and the duty ratio in the working mode.

Referring to FIG. 16, there is shown a schematic view of the PWM driving signal of the switching transistor for the grid-connected inverter in FIG. 2. When the final grid-connected reference current $i_{ref} \geq 0$, the switching transistor $S_1/S_4$ operates at high frequency, while the switching transistor $S_2/S_3$ remains turned off. At this time, the current flows from the positive pole of the DC voltage input source to the positive pole of the grid Grid through the switching transistor $S_1$ and the filter inductor $L_1$, and then returns to the negative pole of the DC voltage input source through the negative pole of the grid Grid, the filter inductor $L_2$ and the switching transistor $S_4$. When the final grid-connected reference current $i_{ref} < 0$, the switching transistor $S_2/S_3$ operates at high frequency, while the switching transistor $S_1/S_4$ remains turned off. At this time, the current flows from the positive pole of the DC voltage input source to the negative pole of the grid Grid through the switching transistor $S_3$ and the filter inductor $L_2$, and then returns to the negative pole of the DC voltage input source through the positive pole of the grid Grid, the filter inductor $L_1$ and the switching transistor $S_2$. As can be seen from FIG. 16, the pulse width of the high-frequency pulse width modulation (PWM) driving signal for driving the switching transistor changes in a sinusoidal manner.

As shown in FIG. 16, according to the grid voltage $V_{grid}$ and the polarity of the final grid-connected reference current $i_{ref}$, a power frequency cycle may be divided into four regions of A, B, C and D. In regions A and C, $i_{ref} \times V_{grid} \geq 0$, and the grid-connected inverter operates in the inverter mode; while in regions B and D, $i_{ref} \times V_{grid} < 0$, and the grid-connected inverter operates in the rectifier mode.

Referring to FIG. 5, the schematic view of the first set of waveforms of switching transistor $S_1/S_4$ driving, drain-source voltage $V_{ds1}/V_{ds4}$ and first filter inductor current $i_{L1}$ in the region A of FIG. 16 is the same as that of FIG. 5 in the first embodiment. In the region A, $i_{ref} \geq 0$, and thus, the switching transistor $S_1/S_4$ operates at high frequency, the switching transistor $S_2/S_3$ remains turned off, and the grid-connected current passes through the filter inductor $L_1$ to generate the first filter inductor current $i_{L1}$ before flowing into the grid. Reference may be made to the first embodiment of reactive power regulation for each stage included in a switching period in the region A and the related description thereof, and this will not be further described herein.

Referring to FIG. 7, the schematic view of the first set of waveforms of switching transistor $S_2/S_3$ driving, drain-source voltage $V_{ds2}/V_{ds3}$ and second filter inductor current $i_{L2}$ in the region B of FIG. 16 is the same as that of FIG. 7 in the first embodiment. In the region B, $i_{ref} < 0$, and thus, the switching transistor $S_2/S_3$ operates at high frequency, the switching transistor $S_1/S_4$ remains turned off, and the grid-connected current passes through the filter inductor $L_2$ to generate the second filter inductor current $i_{L2}$ before flowing into the grid. Reference may be made to the first embodiment of reactive power regulation for each stage included in a switching period in the region B and the related description thereof, and this will not be further described herein.

Referring to FIG. 9 and FIG. 10, the schematic view of a set of waveforms of switching transistor $S_2/S_3$ driving, drain-source voltage $V_{ds2}/V_{ds3}$ and second filter inductor current $i_{L2}$ in the region C of FIG. 16 is the same as that of FIG. 9 in the first embodiment, and the schematic view of a set of waveforms of switching transistor $S_1/S_4$ driving, drain-source voltage $V_{ds1}/V_{ds4}$ and first filter inductor current $i_{L1}$ in the region D of FIG. 16 is the same as that of FIG. 10 in the first embodiment.

The region C is in the inverter mode, $i_{ref} < 0$, and thus, the switching transistor $S_2/S_3$ operates at high frequency, the switching transistor $S_1/S_4$ remains turned off, the grid-connected current passes through the filter inductor $L_2$ to generate the second filter inductor current $i_{L2}$ before flowing into the grid. The variation curves of the drain-source voltage $V_{ds2}/V_{ds3}$ and the second filter inductor current $i_{L2}$ in the region C are the same as those of the drain-source voltage $V_{ds1}/V_{ds4}$ and the first filter inductor current $i_{L1}$ in the region A, respectively, and thus, the switching period in the region C is the same as the switching period in the region A.

The region D is in the rectifier mode, $i_{ref} \geq 0$, and thus, the switching transistor $S_1/S_4$ operates at high frequency, the switching transistor $S_2/S_3$ remains turned off, the grid-connected current passes through the filter inductor $L_1$ to generate the first filter inductor current $i_{L1}$ before flowing into the grid. The variation curves of the drain-source voltage $V_{ds1}/V_{ds4}$ and the first filter inductor current $i_{L1}$ in the region D are the same as those of the drain-source voltage $V_{ds2}/V_{ds3}$ and the second filter inductor current $i_{L2}$ in the region B, respectively, and thus, the switching period in the region D is the same as the switching period in the region B.

So far, the calculation rules of the switching periods corresponding to four regions A, B, C and D in a power frequency cycle for the grid-connected inverter are obtained. In the regions A and C, the grid-connected inverter is in the inverter mode, and the two regions correspond to the calculation rule of the first switching period $T_{s1}$. In the regions B and D, the grid-connected inverter is in the rectifier mode, and the two regions correspond to the calculation rule of the second switching period $T_{s2}$. Therefore, the calculation rule of the first switching period $T_{s1}$ meeting the zero-voltage switching condition in the inverter mode for the grid-connected inverter in FIG. 2 is as follows:

$$\begin{cases} T_{s1} = T_{on1} + T_{off1} + T_1 + T_2 + nT_3 \\ T_{on1} = \dfrac{2Li_{p1}}{V_{in} - V_{grid}} \\ T_{off1} = \dfrac{2Li_{p1}}{V_{in} + V_{grid}} \\ T_1 = \sqrt{2LC}\arccos\left(\dfrac{V_{grid} - V_{in}}{V_{grid} + V_{in}}\right) \\ T_2 = \sqrt{2LC}\left(\dfrac{V_{in} + V_{grid}}{V_{in} - V_{grid}}\right)\sin\left(\dfrac{T_1}{\sqrt{2LC)}}\right) \\ T_3 = 2\pi\sqrt{2LC} \end{cases} \tag{23}$$

$$i_{p1} = i_{ref} + \sqrt{i_{ref}^2 + \frac{i_{ref}(T_1 + T_2 + nT_3)\left(V_{in}^2 - V_{grid}^2\right)}{2L_{in}}}$$

wherein, $i_{p1}$ is the peak value of the filter inductor current in the inverter mode, $V_{in}$ is the DC input voltage, $V_{grid}$ is the grid voltage, L is the inductance of the filter inductor, C is the capacitance of the output capacitor, and n is the adjustment value of the first switching period and is an integer greater than or equal to zero.

According to the calculation rule of the first switching period $T_{s1}$, the first duty ratio $duty_1$ meeting the zero-voltage switching condition in the inverter mode for the grid-connected inverter in FIG. 2 is obtained specifically as follows:

$$duty_1 = \frac{T_{on1}}{T_{on1} + T_{off1} + T_1 + T_2 + nT_3} \tag{24}$$

The calculation rule of the second switching period $T_{s2}$ meeting the valley-voltage switching condition in the rectifier mode for the grid-connected inverter of FIG. 2 is:

$$\begin{cases} T_{s2} = T_{on2} + T_{off2} + (m + 0.5)T_4 \\ T_{on2} = \dfrac{2Li_{p2}}{V_{in} + V_{grid}} \\ T_{off2} = \dfrac{2Li_{p2}}{V_{in} - V_{grid}} \\ T_4 = 2\pi\sqrt{2LC} \end{cases} \tag{25}$$

$$i_{p2} = -i_{ref} + \frac{\sqrt{16L^2V_{in}^2 i_{ref}^2 - 8LV_{in} i_{ref}(m+0.5)T_4\left(V_{in}^2 - V_{grid}^2\right)}}{4L_{in}}$$

wherein, $i_{p2}$ is the peak value of the filter inductor current in the rectifier mode, and m is the adjustment value of the second switching period and is an integer greater than or equal to zero. According to the calculation rule of the second switching period $T_{s2}$, the second duty ratio $duty_2$ meeting the valley-voltage switching condition in the rectifier mode for the grid-connected inverter in FIG. 2 is obtained specifically as follows:

$$duty_2 = \frac{T_{on2}}{T_{on2} + T_{off2} + (m+0.5)T_4} \tag{26}$$

According to the grid-connected inverter control method provided according to the embodiment of the present application, firstly, a DC input voltage, a grid voltage and a grid-connected current are acquired; then a grid-connected original reference current is determined according to the grid voltage and a preset grid-connected power, harmonic components in the grid-connected current is acquired, the harmonic components are accumulated to obtain an adjustment amount of the grid-connected reference current, and a final grid-connected reference current is determined according to the grid-connected original reference current and the adjustment amount of the grid-connected reference current; then, according to the grid voltage and the polarity of the final grid-connected reference current, the switching transistor operating at high frequency and the current working mode of the grid-connected inverter are determined; finally, the switching period and the duty ratio of the switching transistor are determined according to the DC input voltage, the grid voltage and the period calculation rule corresponding to the current working mode, and the zero-voltage/valley-voltage switching of the switching transistor is controlled according to the switching period and the duty ratio of the switching transistor. According to the method of the present application, the zero-voltage/valley switching of the switching transistor is realized after the harmonic influence is removed from the grid-connected reference current, which not only reduces the turn-on loss of the switching transistor and improves the conversion efficiency of the grid-connected inverter, but also effectively suppresses the harmonic components in the grid-connected current.

According to the embodiment of the present application, a grid-connected inverter is provided, which comprises an inverter circuit and a controller. The controller is configured to acquire a DC input voltage, a grid voltage and a grid-connected current, determine a grid-connected original reference current according to the grid voltage and a preset grid-connected power, acquire harmonic components in the grid-connected current, accumulate the harmonic components to obtain an adjustment amount of the final grid-connected reference current, determine the final grid-connected reference current according to the grid-connected original reference current and the adjustment amount of the final grid-connected reference current; determine the switching transistor operating at high frequency and the current working mode of the grid-connected inverter according to the grid voltage and the polarity of the final grid-connected reference current, the working mode including an inverter mode and a rectifier mode; determine the switching period and the duty ratio of the switching transistor according to the DC input voltage, the grid voltage and the period calculation rule corresponding to the working mode, and control the zero-voltage/valley-voltage switching of the switching transistor according to the switching period and the duty ratio of the switching transistor.

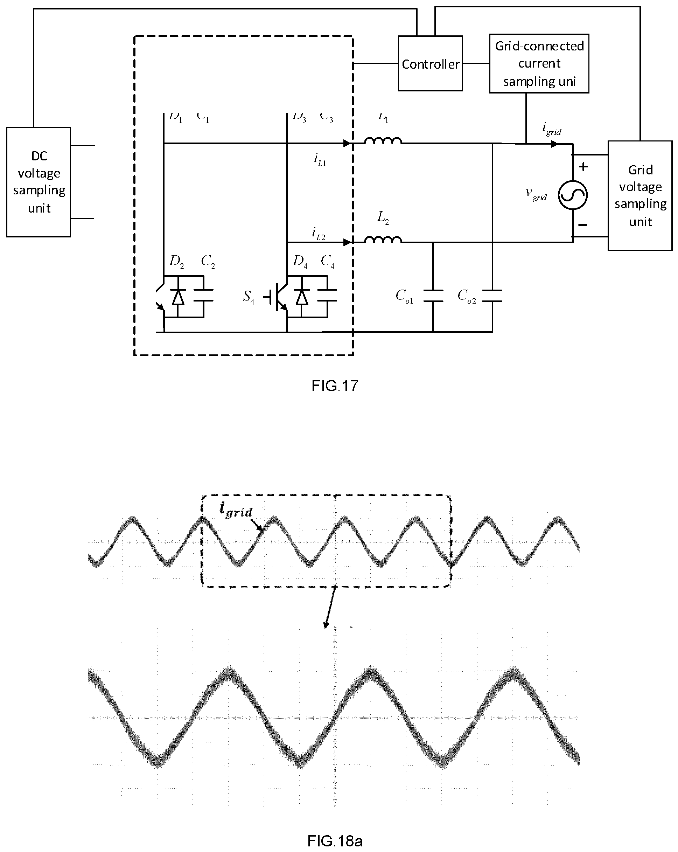

As shown in FIG. 17, which is a schematic structural diagram of a grid-connected inverter provided according to the embodiment of the present application, the grid-connected inverter comprises a DC voltage input source, switching transistors $S_1$ to $S_4$, and body diodes $D_1$ to $D_4$ and output capacitors $C_1$ to $C_4$ connected in parallel with the switching transistors, a filter inductor $L_1$ and a filter capacitor $C_{o2}$ connected to the bridge arm where the switching transistor $S_1/S_2$ is located, a filter inductor $L_2$ and a filter capacitor $C_{o1}$ connected to the bridge arm where the switching transistor $S_3/S_4$ is located, a grid Grid, DC voltage sampling units, grid voltage sampling units, a grid-connected current sampling unit, and a controller.

The DC voltage sampling units are arranged at both sides of the DC voltage input source for collecting the DC input voltage in real time. The grid voltage sampling units are arranged at both sides of the grid voltage for collecting the grid voltage in real time. The grid-connected current sampling unit is arranged at the current output side of the inverter for collecting the grid-connected current in real time. In each switching period, the controller acquires the DC input voltage, the grid voltage and the grid-connected current in real time through the DC voltage sampling units, the grid voltage sampling units and the grid-connected current sampling unit.

In the embodiment of the present application, firstly, according to the grid-connected power set by the user and the sampled grid voltage, the amplitude of the grid-connected original reference current is calculated; then the grid-connected original reference current is calculated according to the amplitude of the grid-connected original reference current (under the operating condition of unity power factor) or according to the amplitude of the grid-connected original reference current and the power factor (under the operating condition of non-unity power factor); then, the harmonic components in the actual grid-connected current are acquired through a band-pass filter, the harmonic components are accumulated to obtain the adjustment amount of the final grid-connected reference current, and the final grid-connected reference current is obtained by subtracting the adjustment amount of the final grid-connected reference current from the grid-connected original reference current. By adopting the aforesaid adjusting method for the grid-connected reference current, the influence of harmonics is effectively suppressed in the DCM control strategy, which makes the control more accurate.

In the embodiment of the present application, based on the topological structure of the grid-connected inverter shown in FIG. 17, the waveform data of the drain-source voltage across the switching transistor operating at high frequency and the corresponding filter inductor current in the inverter mode and the rectifier mode are analyzed respectively, and the calculation rule of the first switching period $T_{s1}$ meeting the zero-voltage switching condition in the inverter mode can be determined as follows:

$$\begin{cases} T_{s1} = T_{on1} + T_{off1} + T_1 + T_2 + nT_3 \\ T_{on1} = \dfrac{2Li_{p1}}{V_{in} - V_{grid}} \\ T_{off1} = \dfrac{2Li_{p1}}{V_{in} + V_{grid}} \\ T_1 = \sqrt{2LC}\ \arccos\left(\dfrac{V_{grid} - V_{in}}{V_{grid} + V_{in}}\right) \\ T_2 = \sqrt{2LC}\left(\dfrac{V_{in} + V_{grid}}{V_{in} - V_{grid}}\right)\sin\left(\dfrac{T_1}{\sqrt{2LC}}\right) \\ T_3 = 2\pi\sqrt{2LC} \end{cases}$$

and the calculation rule of the second switching period $T_{s2}$ meeting the valley-voltage switching condition in the rectifier mode can be determined as follows:

$$\begin{cases} T_{s2} = T_{on2} + T_{off2} + (m + 0.5)T_4 \\ T_{on2} = \dfrac{2Li_{p2}}{V_{in} + V_{grid}} \\ T_{off2} = \dfrac{2Li_{p2}}{V_{in} - V_{grid}} \\ T_4 = 2\pi\sqrt{2LC} \end{cases}$$

$$i_{p1} = i_{ref} + \sqrt{i_{ref}^2 + \frac{i_{ref}(T_1 + T_2 + nT_3)\left(V_{in}^2 - V_{grid}^2\right)}{2LV_{in}}}$$

wherein, , $i_{p2} = -i_{ref} +$

$$\frac{\sqrt{16\ ^2V_{in}^2 i_{ref}^2 - 8LV_{in}i_{ref}(m+0.5)T_4\left(V_{in}^2 - V_{grid}^2\right)}}{4L\ _{in}}$$

, $i_{p1}$ is the peak value of the filter inductor current in the inverter mode, $i_{p2}$ is the peak value of the filter inductor current in the rectifier mode, $V_{in}$ is the DC input voltage, $V_{grid}$ is the grid voltage, L is the inductance of the filter inductor, and C is the capacitance of the output capacitor.

In the embodiment of the present application, the controller is further configured to determine that the grid-connected inverter is in the inverter mode when the polarity of the grid voltage is the same as that of the final grid-connected reference current or one of the grid voltage and the final grid-connected reference current is zero, and determine that the grid-connected inverter is in the rectifier mode when the polarity of the grid voltage is opposite to that of the final grid-connected reference current.

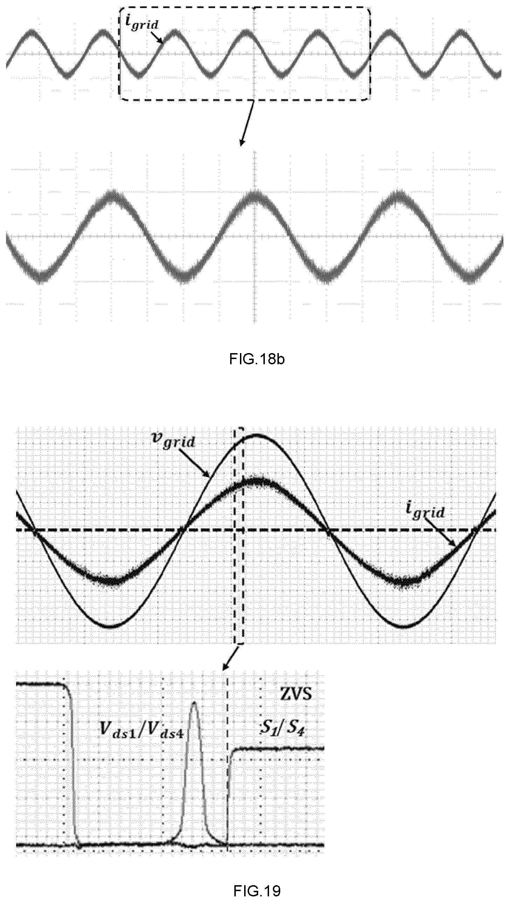

Referring to FIG. 18a and FIG. 18b, FIG. 18a is a diagram illustrating the waveform of the grid-connected current before harmonic suppression of the grid-connected current (without harmonic suppression strategy) according to the embodiment of the present application, and FIG. 18b is a diagram illustrating the waveform of the grid-connected current after harmonic suppression of the grid-connected current according to the embodiment of the present application. As compared to the grid-connected current waveform without the harmonic suppression strategy, the grid-connected current obtained by the harmonic suppression strategy performed on the grid-connected current according to the present application exhibits superior sinusoidal waveform quality with significantly reduced harmonic components.

Referring to FIG. 19, there is shown a control effect diagram under the operating condition of unity power factor according to an embodiment of the present application. Under the operating condition of unity power factor, the switching transistor is turned on when the drain-source voltage resonates to zero, which effectively reduces the loss caused by the turn-on process, and the grid-connected current exhibits superior sinusoidal waveform quality.

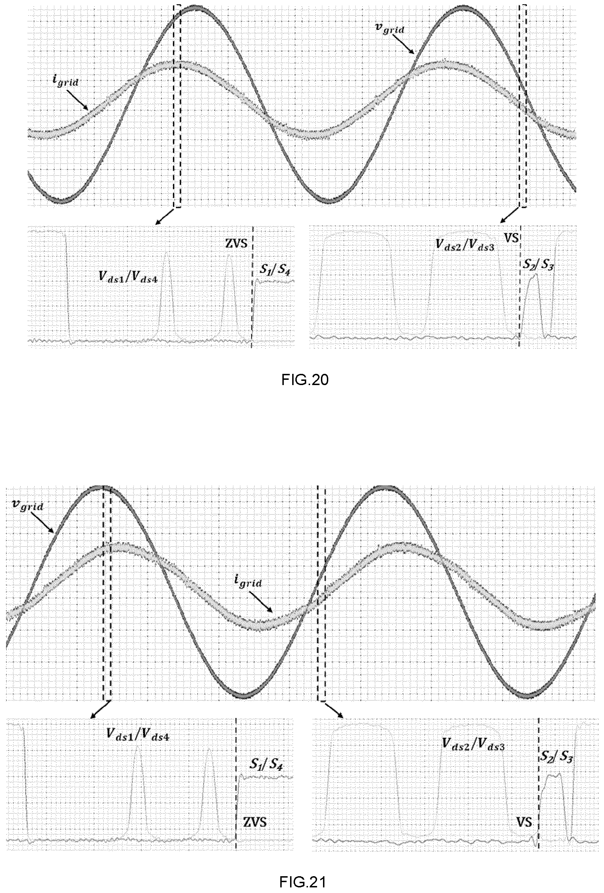

Referring to FIG. 20, there is shown a control effect diagram when the grid-connected current leads the grid voltage under the operating condition of non-unity power factor according to an embodiment of the present application. The switching transistor realizes zero-voltage/valley-voltage switching in the inverter mode/rectifier mode, and the grid-connected current exhibits superior sinusoidal waveform quality.

Referring to FIG. 21, there is shown a control effect diagram when the grid-connected current lags the grid voltage under the operating condition of non-unity power factor according to an embodiment of the present application. The switching transistor also realizes zero-voltage/valley-voltage switching in the inverter mode/rectifier mode, and the grid-connected current exhibits superior sinusoidal waveform quality.

The controller of the grid-connected inverter in the embodiment of the present application can execute any grid-connected inverter control method described in the first embodiment, and has functional modules and benefits corresponding to the method. For technical details not elucidated in the embodiments, reference may be made to the grid-connected inverter control method provided in the first embodiment of the present application.

Finally it shall be noted that, the above embodiments are only used to describe but not to limit the technical solutions of this application; and within the spirits of this application, technical features of the above embodiments or different embodiments may also be combined with each other, the steps may be implemented in an arbitrary order, and many other variations in different aspects of this application described above are possible although, for purpose of simplicity, they are not provided in the details. Although this application has been detailed with reference to the above embodiments, those of ordinary skill in the art shall appreciate that modifications can still be made to the technical solutions disclosed in the above embodiments or equivalent substations may be made to some of the technical features, and the corresponding technical solutions will not essentially depart from the scope of the embodiments of this application due to such modifications or substations.

**Claims**

1. A grid-connected inverter control method, being **characterized in that**, the method comprises:

   Step A, acquiring a DC input voltage, a grid voltage and a grid-connected reference current;
   Step B, determining a switching transistor operating at high frequency according to the polarity of the grid-connected reference current;
   Step C, determining the current working mode of the grid-connected inverter according to the grid voltage and the polarity of the grid-connected reference current, the working mode including an inverter mode and a rectifier mode;
   Step D, determining the switching period and the duty ratio of the switching transistor according to the DC input voltage, the grid voltage and a period calculation rule corresponding to the working mode, the period calculation rule being a calculation rule of the switching period meeting zero-voltage or valley-voltage switching conditions; and
   Step E, controlling zero-voltage or valley-voltage switching of the switching transistor according to the switching period and the duty ratio of the switching transistor.

2. The method according to Claim 1, being **characterized in that**, the step of acquiring the grid-connected reference current comprises:
   acquiring a power factor value, and determining the grid-connected reference current according to the power factor value.

3. The method according to Claim 1, being **characterized in that**, the step of acquiring the grid-connected reference current comprises:

   acquiring a grid-connected current;
   determining a grid-connected original reference current according to the grid voltage and a preset grid-connected power;
   acquiring harmonic components in the grid-connected current, and accumulating the harmonic components to obtain an adjustment amount for the grid-connected reference current; and
   determining the grid-connected reference current according to the grid-connected original reference current and the adjustment amount for the grid-connected reference current.

4. The method according to Claim 1, being **characterized in that**, the calculation rule of the first switching period $T_{s1}$ meeting the zero-voltage switching condition in the inverter mode for the grid-connected inverter is as follows:

$$\begin{cases} T_{s1} = T_{on1} + T_{off1} + T_1 + T_2 + nT_3 \\ T_{on1} = \dfrac{2Li_{p1}}{V_{in} - V_{grid}} \\ T_{off1} = \dfrac{2Li_{p1}}{V_{in} + V_{grid}} \\ T_1 = \sqrt{2LC} \arccos\left(\dfrac{V_{grid} - V_{in}}{V_{grid} + V_{in}}\right) \\ T_2 = \sqrt{2LC}\left(\dfrac{V_{in} + V_{grid}}{V_{in} - V_{grid}}\right)\sin\left(\dfrac{T_1}{\sqrt{2LC}}\right) \\ T_3 = 2\pi\sqrt{2LC} \end{cases}$$

wherein, $i_{p1} = i_{ref} + \sqrt{i_{ref}^2 + \dfrac{i_{ref}(T_1 + T_2 + nT_3)\left(V_{in}^2 - V_{grid}^2\right)}{2LV_{in}}}$, $i_{p1}$ is the peak value of the filter inductor current in the inverter mode, $V_{in}$ is the DC input voltage, $V_{grid}$ is the grid voltage, L is the inductance of the filter inductor, C is the capacitance of the output capacitor, $i_{ref}$ is the grid-connected reference current, and n is the adjustment value of the first switching period and is an integer greater than or equal to zero.

5. The method according to Claim 4, being **characterized in that**, the calculation rule of the second switching period $T_{s2}$ meeting the valley-voltage switching condition in the rectifier mode for the grid-connected inverter is as follows:

$$\begin{cases} T_{s2} = T_{on2} + T_{off2} + (m + 0.5)T_4 \\ T_{on2} = \dfrac{2Li_{p2}}{V_{in} + V_{grid}} \\ T_{off2} = \dfrac{2Li_{p2}}{V_{in} - V_{grid}} \\ T_4 = 2\pi\sqrt{2LC} \end{cases}$$

wherein, $i_{p2} = -i_{ref} + \dfrac{\sqrt{16\ ^2V_{in}^2 i_{ref}^2 - 8LV_{in}i_{ref}(m+0.5)T_4\left(V_{in}^2 - V_{grid}^2\right)}}{4LV_{in}}$, $i_{p2}$ is the peak value of the filter inductor current in the rectifier mode, and m is the adjustment value of the second switching period and is an integer greater than or equal to zero.

6. The method according to Claim 5, being **characterized in that**, the first duty ratio $duty_1$ meeting the zero-voltage switching condition in the inverter mode for the grid-connected inverter is:

$$duty_1 = \dfrac{T_{on1}}{T_{on1} + T_{off1} + T_1 + T_2 + nT_3}$$

the second duty ratio $duty_2$ meeting the valley-voltage switching condition in the rectifier mode for the grid-connected inverter is:

$$duty_2 = \dfrac{T_{on2}}{T_{on2} + T_{off2} + (m + 0.5)T_4}.$$

7. The method according to Claim 1, being **characterized in that**, the Step C comprises:

determining that the grid-connected inverter is in the inverter mode when the polarity of the grid voltage is the same as that of the grid-connected reference current or one of the grid voltage and the grid-connected reference current is zero; and

determining that the grid-connected inverter is in the rectifier mode when the polarity of the grid voltage is opposite to that of the grid-connected reference current.

8. The method according to Claim 1, being **characterized in that**, further comprising:

according to a set of waveform data of the drain-source voltage across the switching transistor operating at high frequency and the corresponding filter inductor current in each of the working modes, determining the start and end time points of the switching period meeting the zero-voltage or valley-voltage switching condition in each of the working modes; and

based on the start and end time points of the switching period in each of the working modes, determining a calculation rule of the switching period corresponding to each of the working modes.

9. The method according to Claim 8, being **characterized in that**, meeting the zero-voltage or valley-voltage switching condition means that the start and end time points of the switching period are the time points where the filter inductor current and the drain-source voltage are both zero or valley values in the set of waveform data.

10. A grid-connected inverter, being **characterized in that**, comprising a controller, wherein the controller is configured to execute the method according to any of Claims 1-9.

Acquiring a power factor value, and determining the grid-connected reference current according to the power factor value

S101

Determining a switching transistor operating at high frequency according to the polarity of the grid-connected reference current

S102

Acquiring the DC input voltage and the grid voltage, and determining the current working mode of the grid-connected inverter according to the grid voltage and the polarity of the grid-connected reference current, wherein the working mode includes an inverter mode and a rectifier mode

S103

Determining the switching period and the duty ratio of the switching transistor according to the DC input voltage, the grid voltage and a period calculation rule corresponding to the working mode, wherein the period calculation rule is a calculation rule of the switching period meeting zero-voltage/valley-voltage switching conditions

S104

Controlling zero-voltage/valley-voltage switching of the switching transistor according to the switching period and the duty ratio of the switching transistor

S105

FIG. 1

FIG. 2

FIG. 3

FIG. 4

FIG. 5

FIG. 6

FIG.7

FIG.8

FIG.9

FIG.10

FIG.11

FIG.12

FIG.13

| Acquiring a DC input voltage, a grid voltage and a grid-connected current | S201 |

| Determining a grid-connected original reference current according to the grid voltage and a preset grid-connected power | S202 |

| Acquiring harmonic components in the grid-connected current, and accumulating the harmonic components to obtain an adjustment amount for the grid-connected reference current | S203 |

| Determining the final grid-connected reference current according to the grid-connected original reference current and the adjustment amount of the grid-connected reference current | S204 |

| Determining the switching transistor operating at high frequency and the current working mode of the grid-connected inverter according to the grid voltage and the polarity of the final grid-connected reference current | S205 |

| Determining the switching period and the duty ratio of the switching transistor according to the DC input voltage, the grid voltage and the period calculation rule corresponding to the working mode, and controlling zero-voltage/valley-voltage switching of the switching transistor according to the switching period and the duty ratio of the switching transistor | S206 |

FIG.14

FIG.15

FIG.16

FIG.17

FIG.18a

FIG.18b

FIG.19

FIG.20

FIG.21

| | Europäisches Patentamt<br>European Patent Office<br>Office européen des brevets | **EUROPEAN SEARCH REPORT** | **Application Number**<br>EP 25 18 6677 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZHANG JIANTAO ET AL: "Model-Based Control for Grid-Tied Inverters Operated in Discontinuous Current Mode With Low Harmonic Current Distortion",<br>IEEE TRANSACTIONS ON POWER ELECTRONICS, INSTITUTE OF ELECTRICAL AND ELECTRONICS ENGINEERS, USA,<br>vol. 35, no. 10, 6 March 2020 (2020-03-06), pages 11167-11180, XP011796571,<br>ISSN: 0885-8993, DOI: 10.1109/TPEL.2020.2978871<br>[retrieved on 2020-06-29]<br>* figures 1-5 *<br>* Chapter II *<br>----- | 1-10 | INV.<br>H02M1/00<br>H02M1/12<br>H02M7/5387 |
| Y | SUN JINGJING ET AL: "Single-Phase GaN-Based T-Type Totem-Pole Rectifier With Full-Range ZVS Control and Reactive Power Regulation",<br>IEEE TRANSACTIONS ON POWER ELECTRONICS, INSTITUTE OF ELECTRICAL AND ELECTRONICS ENGINEERS, USA,<br>vol. 38, no. 2,<br>19 October 2022 (2022-10-19), pages 2191-2201, XP011927574,<br>ISSN: 0885-8993, DOI: 10.1109/TPEL.2022.3215969<br>[retrieved on 2022-11-15]<br>* figures 1, 2, 10; tables I, II *<br>* Chapters II and III *<br>-----<br>-/-- | 1-10 | TECHNICAL FIELDS SEARCHED (IPC)<br><br>H02M |

The present search report has been drawn up for all claims

| Place of search | Date of completion of the search | Examiner |
|---|---|---|
| The Hague | 20 November 2025 | Madouroglou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | HUANG CHENG ET AL: "Efficiency Improvement With Off-Time Discrete Control for GaN-Based MHz-Operated Discontinuous Current Mode Grid-Tied Inverter", IEEE TRANSACTIONS ON INDUSTRY APPLICATIONS, IEEE SERVICE CENTER, PISCATAWAY, NJ, US, vol. 57, no. 5, 29 June 2021 (2021-06-29), pages 5108-5116, XP011874870, ISSN: 0093-9994, DOI: 10.1109/TIA.2021.3093254 [retrieved on 2021-08-25] * figures 1-3, 7 * | 3 | |
| Y | HE JINWEI ET AL: "Active Harmonic Filtering Using Current-Controlled, Grid-Connected DG Units With Closed-Loop Power Control", IEEE TRANSACTIONS ON POWER ELECTRONICS, INSTITUTE OF ELECTRICAL AND ELECTRONICS ENGINEERS, USA, vol. 29, no. 2, 1 February 2014 (2014-02-01), pages 642-653, XP011524656, ISSN: 0885-8993, DOI: 10.1109/TPEL.2013.2255895 [retrieved on 2013-08-20] * figure 1 * | 3 | TECHNICAL FIELDS SEARCHED (IPC) |

The present search report has been drawn up for all claims

| Place of search | Date of completion of the search | Examiner |
|---|---|---|
| The Hague | 20 November 2025 | Madouroglou, E |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)